# EUROPÄISCHE PATENTSCHRIFT

(11) **EP 2 975 191 B1**
(45) Veröffentlichungstag und Bekanntmachung des Hinweises auf die Patenterteilung: **05.10.2016**
(21) Anmeldenummer: 15401068.0
(22) Anmeldetag: 09.07.2015
(51) Int. Cl.: E04F 13/08

(54) **SCHRAUBE UND DÄMMSTOFFDÜBEL**
SCREW AND PLUG FOR INSULATION MATERIAL
VIS ET CHEVILLE DE MATERIAU ISOLANT

(30) Priorität: 16.07.2014 DE 102014109959
(43) Veröffentlichungstag der Anmeldung: 20.01.2016
(73) Patentinhaber: fischerwerke GmbH & Co. KG, 72178 Waldachtal (DE)
(72) Erfinder: Renz, Jürgen, 72202 Nagold (DE)

(56) Entgegenhaltungen:
- EP-A1- 0 765 979
- EP-A1- 1 693 530
- DE-U1- 20 103 427

## Beschreibung

Die Erfindung betrifft eine Schraube mit den Merkmalen des Oberbegriffs des Anspruchs 1 und einen Dämmstoffdübel mit den Merkmalen des Oberbegriffs des Anspruchs 10.

Eine gattungsgemäße Schraube zur Verwendung in einem gattungsgemäßen Dämmstoffdübel ist aus der europäischen Patentanmeldung EP 1 693 530 A1 bekannt. Der bekannte Dämmstoffdübel dient zur Befestigung einer Dämmstoffplatte, beispielsweise einer Platte aus extrudiertem Polystyrol, an einem Untergrund, beispielsweise einer Wand aus Beton. Der Dämmstoffdübel umfasst einen rohrförmigen Schaft, ein Dämmstoffhalteelement und eine Schraube. Das Dämmstoffhalteelement ist als bundartiger Dämmstoffteller ausgeführt, der einstückig am Schaft angeordnet ist. Nach dem Einbringen des rohrförmigen Schafts in die Dämmstoffplatte liegt der Dämmstoffteller auf der Außenseite der Dämmstoffplatte flächig auf. Am vorderen Ende des rohrförmigen Schafts ist ein Spreizbereich ausgebildet, der durch das Eindrehen der Schraube aufspreizbar ist, so dass der Dämmstoffdübel in einem Bohrloch im Untergrund verspannt und dadurch befestigt werden kann. Die Schraube ist zweiteilig ausgeführt und besteht aus einem Schraubabschnitt aus Metall, der ein Gewinde zum Eindrehen der Schraube aufweist, und einem Isolationsabschnitt, der mit dem Schraubabschnitt durch eine mechanische Kupplung dreh- und axialfest verbunden ist. Der Isolationsabschnitt besteht aus Kunststoff und reduziert den Wärmeübergang durch die Schraube. Um ein Verziehen des zylinderartigen Isolationsabschnitts bei der Herstellung durch Spritzgießen zu verhindern, sind am Isolationsabschnitt Rippen und in Längsrichtung verlaufende, nutartige Vertiefungen ausgebildet. Nachteilig an der Ausbildung der nutartigen Vertiefungen am Isolationsabschnitt ist, dass sie den Torsionswiderstand des Isolationsabschnitts stark reduzieren, so dass relativ große Drehmomente, wie sie beim Eindrehen der Schraube in den Spreizbereich auftreten können, zu einem Bruch des Isolationselements führen.

Aufgabe der Erfindung ist es daher, eine Schraube mit einem Isolationsabschnitt aus Kunststoff für einen Dämmstoffdübel vorzuschlagen, die ein gegenüber der aus dem Dokument EP 1 693 530 A1 bekannten Schraube vergrößertes Drehmoment aufnehmen kann.

Diese Aufgabe wird erfindungsgemäß durch eine Schraube mit den Merkmalen des Anspruchs 1 gelöst, die auch Bestandteil eines erfindungsgemäßen Dämmstoffdübels nach Anspruch 10 ist. Die erfindungsgemäße Schraube zur Verwendung in einem Dämmstoffdübel umfasst einen Schraubabschnitt und einen Isolationsabschnitt. Der Schraubabschnitt erstreckt sich entlang einer Längsachse der Schraube und besteht insbesondere aus Metall. Der Schraubabschnitt weist ein Gewinde auf, mit dem die Schraube in einen Spreizbereich eines Dämmstoffdübels zum Aufspreizen eingedreht oder direkt in einen entsprechenden Untergrund, beispielsweise in Holz, eingeschraubt werden kann. Der Isolationsabschnitt ist in Einbringrichtung der Schraube im Wesentlichen hinter dem Schraubabschnitt angeordnet, wobei sich Teile des Isolations- und des Schraubabschnitts überlappen können, insbesondere um eine Verbindung zwischen den beiden Abschnitten herzustellen. Mit "Einbringrichtung" ist hier die Richtung gemeint, in der die Schraube in einen rohrförmigen Schaft eines Dämmstoffdübels oder in ein Bohrloch der Dämmstoffplatte eingebracht wird. Der Isolationsabschnitt besteht zumindest außen aus Kunststoff, wodurch der Wärmeübergang durch die Schraube reduziert ist. Der Isolationsabschnitt ist mit dem Schraubabschnitt dreh- und axialfest verbunden. Die Verbindung kann beispielsweise über eine mechanische Rastverbindung erfolgen, bevorzugt ist allerdings eine Verbindung durch teilweise Umspritzung des Schraubabschnitts mit dem Kunststoffmaterial des Isolationsabschnitts. Der Isolationsabschnitt weist mindestens zwei Rippen auf, die im Wesentlichen in Längsrichtung verlaufen. In Umfangsrichtung zwischen den Rippen ist eine nutartige Vertiefung ausgebildet, die sich insbesondere in Längsrichtung und/oder im Wesentlichen über die Länge der Rippen erstreckt. Sind mehr als zwei Rippen vorhanden, so ist insbesondere jeweils zwischen zwei benachbarten Rippen eine Vertiefung ausgebildet.

Kennzeichnend für die erfindungsgemäße Schraube ist, dass die Rippen durch mindestens einen Steg miteinander verbunden sind, der zur Längsachse geneigt ist und die Vertiefung in zwei Abschnitte unterteilt. Durch den Steg wird der Isolationsabschnitt verstärkt und die Rippen gegeneinander abgestützt, so dass der Isolationsabschnitt ein großes Drehmoment aufnehmen kann. Aufgrund der Neigung des Stegs wird der Isolationsabschnitt nicht nur in Umfangsrichtung verstärkt, sondern auch in Längsrichtung, so dass der Steg auch als Druck- oder Zugband wirken kann. Mit "Steg" ist hier allgemein ein die beiden Rippen verbindender Körper gemeint. Dass der Steg zur Längsachse "geneigt" ist, meint, dass der Steg nicht parallel zur Längsachse ist. Insbesondere schneidet der Steg eine Radialebene, in der die Längsachse liegt und die der Steg durchdringt, unter einem Winkel, der ungleich 90° ist. Insbesondere liegt der Winkel bei 30° bis 60°, insbesondere zwischen 40° und 50°. Der Steg kann gerade oder gekrümmt verlaufen und ist insbesondere als eine sich in radialer Richtung erstreckende Wand ausgebildet, deren Außenseite in Umfangsrichtung gewölbt sein kann. Insbesondere besteht der Steg aus demselben Material wie die Rippen und wird als Bestandteil des Isolationsabschnitts mit dem Isolationsabschnitt geformt, insbesondere durch Spritzgießen.

Vorzugsweise sind am Isolationsabschnitt mehrere nutartige Vertiefungen ausgebildet und in mindestens zwei Vertiefungen ist jeweils mindestens ein Steg angeordnet. Hierdurch wird die Verstärkung des Isolationsabschnitts verbessert, ohne dass sich die Neigung zum Verzug bei der Herstellung des Isolationsabschnitts vergrößert. Insbesondere sind die Stege in zwei benachbarten Vertiefungen angeordnet, die insbesondere gemeinsam zumindest einen Abschnitt einer Wendel bilden. Durch die Kombination und wendelartige Ausbildung der Stege kann der Isolationsabschnitt über einen Großteil seiner Länge verstärkt und stabilisiert werden, ohne dass sich die Neigung zum Verziehen erhöht.

Bei einer bevorzugten Ausgestaltungsform der erfindungsgemäßen Schraube sind zwei in Umfangsrichtung benachbarte Rippen durch mindestens zwei Stege verbunden, die zur Längsachse und gegeneinander geneigt sind und sich kreuzförmig in einem Kreuzungspunkt schneiden, derart, dass sie gemeinsam ein Verstärkungskreuz bilden, das die Rippen gegeneinander abstützt. Durch die Ausbildung der Stege als Verstärkungskreuz wird eine besonders stabile Ausbildung des Isolationsabschnitts erreicht. Insbesondere sind die Rippen und Stege derart verbunden, dass die Rippen mit dem Verstärkungskreuz ein Fachwerk bilden, das den Isolationsabschnitt aussteift.

Bevorzugt ist zudem, dass in zwei benachbarten Vertiefungen jeweils ein Verstärkungskreuz angeordnet ist. Vorzugsweise sind diese zwei Verstärkungskreuze in Längsrichtung zueinander versetzt angeordnet, so dass der Isolationsabschnitt der Schraube in Umfangs- und Längsrichtung an verschiedenen Stellen verstärkt wird. Somit wird eine gleichmäßige Verstärkung des Isolationsabschnitts bei minimalem Materialeinsatz und Verzugsanfälligkeit beim Spritzgießen erreicht. Dies kann noch weiter verbessert werden, wenn das vordere Ende des hinteren Verstärkungskreuzes im Wesentlichen den gleichen Abstand vom vorderen Ende der Schraube aufweist wie das hintere Ende des vorderen Verstärkungskreuzes, wie dies für eine bevorzugte Ausgestaltungsform vorgesehen ist, wobei die beiden Verstärkungskreuze vorzugsweise die gleiche Längsausdehnung aufweisen. Mit "vorn" ist in Einbringrichtung der Schraube in einen Verankerungsgrund oder in eine Dübelhülse vorn gemeint, mit "hinten" in Einbringrichtung hinten.

In einer weiteren bevorzugten Ausgestaltungsform der erfindungsgemäßen Schraube sind die Stege derart angeordnet, dass sie zwei schraubengewindeartig und in einander entgegengesetzter Richtung verlaufende Wendeln bilden, die sich insbesondere schneiden. Die Ausbildung von zwei Wendeln hat den Vorteil, dass unabhängig von der Drehrichtung der Schraube immer eine Wendel als Druckband und eine als Zugband wirkt, was den Isolationsabschnitt zur Aufnahme von Drehmomenten wirksam verstärkt.

Vorzugsweise ist mindestens ein Steg dachförmig abgeschrägt, wodurch der Steg in sich stabil ist und ein Ausknicken des Stegs bei Druck verhindert wird. Ist mehr als ein Steg vorhanden, dann ist insbesondere die Mehrzahl der Stege, insbesondere jeder der Stege dachförmig abgeschrägt, um eine hohe Stabilität des Isolationsabschnitts zu erreichen. "Dachförmig" meint hier, dass an den Stegen ebene und gegenüber einer Radial- und/oder Querschnittsebene geneigte Flächen angeordnet sind.

Die erfindungsgemäße Schraube ist Bestandteil eines erfindungsgemäßen Dämmstoffdübels zur Befestigung einer Dämmstoffplatte an einem Untergrund. Der erfindungsgemäße Dämmstoffdübel umfasst neben der erfindungsgemäßen Schraube einen Dämmstoffhalter. Der Dämmstoffhalter dient zum Halten der Dämmstoffplatte und kann beispielsweise als Dämmstoffteller oder als Dämmstoffwendel ausgebildet sein. Der Dämmstoffhalter kann an einem rohrförmigen Schaft ausgebildet sein, insbesondere einstückig. Die Schraube kann im rohrförmigen Schaft angeordnet sein und dient zur Befestigung des Dämmstoffdübels im Untergrund. Hierzu kann sie direkt in den Untergrund, beispielsweise in Holz eindringen, oder mit einem Spreizbereich des Dämmstoffdübels zusammenwirken.

Die Erfindung wird nachfolgend anhand von mehreren Ausführungsbeispielen näher erläutert.

Es zeigen:
- Figur 1: eine erste erfindungsgemäße Schraube in einer perspektivischen Ansicht;
- Figur 2: eine Detaildarstellung des Isolationsabschnitts der ersten erfindungsgemäßen Schraube;
- Figur 3: eine zweite erfindungsgemäße Schraube in einer perspektivischen Ansicht;
- Figur 4: eine dritte erfindungsgemäße Schraube in einer perspektivischen Ansicht;
- Figur 5: einen erfindungsgemäßen Dämmstoffdübel mit der zweiten erfindungsgemäßen Schraube in einer perspektivischen Ansicht; und
- Figur 6: den erfindungsgemäßen Dämmstoffdübel in einer perspektivischen Schnittdarstellung.

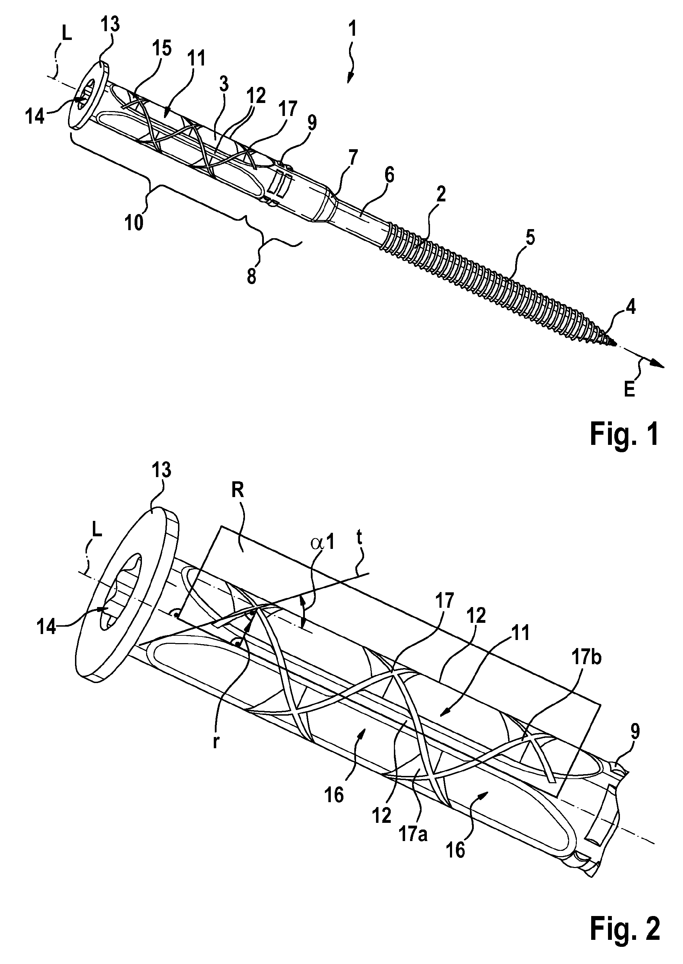

Figur 1 zeigt eine Schraube 1 mit einem Schraubabschnitt 2 aus Metall und einem Isolationsabschnitt 3 aus Kunststoff, der in Figur 2 im Detail dargestellt ist. Der Schraubabschnitt 2 erstreckt sich, wie die gesamte Schraube 1, entlang einer Längsachse L und weist an seinem in Einbringrichtung E in einen nicht dargestellten Verankerungsgrund vorderen Ende eine kegelförmige Spitze 4 auf, von der aus sich ein Gewinde 5 nach hinten bis zu einem gewindefreien Schaft 6 des Schraubabschnitt 2 erstreckt. An den Schraubabschnitt 2 schließt sich entgegen der Einbringrichtung E ein Isolationsabschnitt 3 aus Kunststoff an, der den hinteren Teil der Schraube 1 bildet. Der Isolationsabschnitt 3 ist mit dem Schraubabschnitt 2 dreh- und axialfest verbunden. Hierzu ist ein hinterer Teil des Schafts 6 mit dem Kunststoff des Isolationsabschnitts 3 im Spritzgussverfahren umspritzt. Der Isolationsabschnitt 3 weist eine zylindrische Grundform auf, mit einem konischen Übergang 7 zum Schaft 6. An den konische Übergang 7 schließt sich nach hinten ein vorderer zylindrischer Abschnitt 8 mit glatter Mantelfläche an, an dessen hinterem Teil Wulste 9 angeordnet sind, die in radialer Richtung r über den Grundkörper des Isolationsabschnitts 3 überstehen. An den vorderen zylindrischen Abschnitt 8 schließt sich nach hinten ein hinterer zylindrischer Abschnitt 10 an, der mehrere nutartige Vertiefungen 11 aufweist, die zwischen Rippen 12 ausgebildet sind und sich in Längsrichtung im Wesentlichen über den gesamten hinteren zylindrischen Abschnitt 10 erstrecken. Ein im Durchmesser gegenüber dem hinteren zylindrischen Abschnitt 10 erweiterter Bund 13 bildet das hintere Ende des Isolationsabschnitts 3 und der Schraube 1. Im Isolationsabschnitt 3 ist hinten eine Werkzeugaufnahme 14 angeordnet, über die mit einem nicht dargestellten Drehwerkzeug, beispielsweise einem Akkuschrauber, ein Drehmoment auf die Schraube 1 übertragen werden kann.

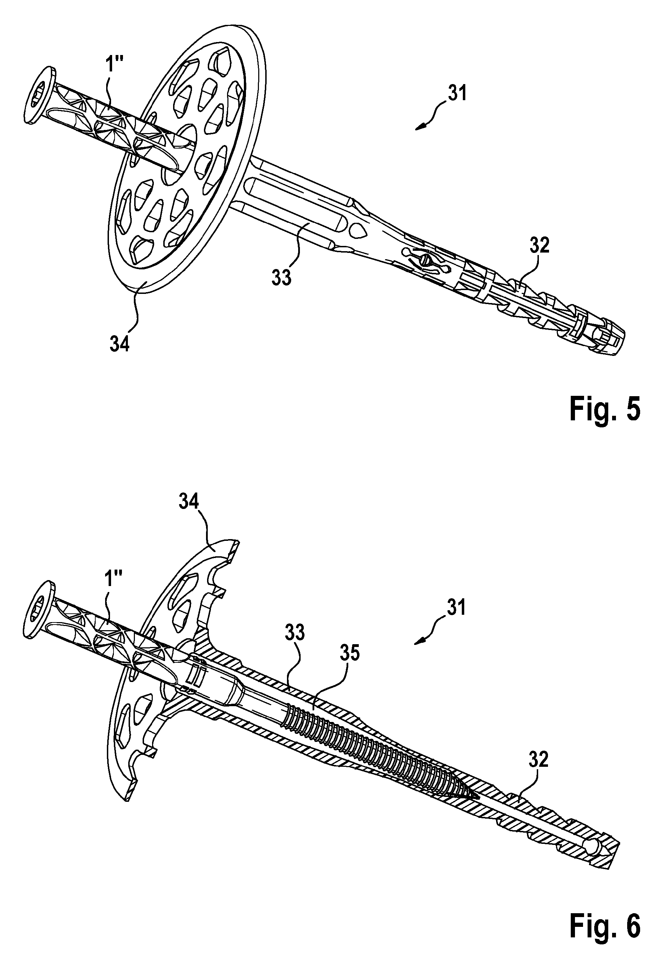

Die Vertiefungen 11 schwächen den Querschnitt des Isolationsabschnitts 3 und verhindern, dass sich der Isolationsabschnitt 3 beim Abkühlen nach dem Spritzgießen verzieht. Damit über den Isolationsabschnitt 3 ein Drehmoment von der Werkzeugaufnahme 14 auf den Schraubabschnitt 2 übertragen werden kann, das groß genug ist, dass die Schraube 1 in den Spreizabschnitt 32 eines Dämmstoffdübels 31 (vgl. Fig. 5 und 6) eingedreht werden kann, ohne dass der Isolationsabschnitt 3 aufgrund des durch die Vertiefungen 11 geschwächten Querschnitts bricht, sind in den nutartigen Vertiefungen 11 Stege 15 angeordnet, die die Rippen 12 miteinander verbinden. Die Stege 15 sind wandartig ausgebildet, wobei ihre Außenseiten gewölbt und der Mantelfläche des zylindrischen Grundkörpers des Isolationsabschnitts 3 angepasst sind. Die Stege 15 verlaufen zwischen zwei Rippen 12 im Wesentlichen gerade und sind gegenüber der Längsachse L geneigt. Sie verlaufen also nicht parallel zur Längsachse L. Das bedeutet, dass eine in Richtung der Verbindung der Rippen 12 durch einen Steg 15 an einen Steg 15 angelegte Tangente t eine zwischen zwei benachbarten Rippen 12 verlaufende Radialebene R, in der die Längsachse L liegt, unter einem Winkel α₁ schneidet, der ungleich 90° ist und im Ausführungsbeispiel 45° beträgt. Dabei teilen die Stege 15 die Vertiefungen 11 in mehrere Abschnitte 16.

Die Stege 15 sind in den Vertiefungen 11 derart angeordnet, dass jeweils zwei Stege 15 sich kreuzförmig in einem Kreuzungspunkt schneiden und gemeinsam ein Verstärkungskreuz 17 bilden. Die Stege 15 sind dabei gegeneinander der Längsachse L geneigt und miteinander verbunden. Die Stege 15 sind gleich lang und symmetrisch ausgebildet und sind mit den Rippen 12 derart verbunden, dass die Rippen 12 mit jedem Verstärkungskreuz 17 ein Fachwerk bilden, das den Isolationsabschnitt 3 aussteift. Wie in den Figuren 1 und 2 zu sehen ist, sind in benachbarten Vertiefungen 11 jeweils mehrere Verstärkungskreuze 17 angeordnet, die in Längsrichtung versetzt zueinander sind. Bei der in den Figuren 1 und 2 dargestellten Schraube 1 sind die Verstärkungskreuze 17 in benachbarten Vertiefungen 11 derart angeordnet, dass das vordere Ende eines hinteren Verstärkungskreuzes 17a im Wesentlichen den gleichen Abstand von der das vordere Ende der Schraube 1 bildenden Spitze 4 aufweist, wie das hintere Ende eines vorderen Verstärkungskreuzes 17b. Alle Verstärkungskreuze 17 weisen die gleiche Längsausdehnung auf. Dabei sind die Stege 15 derart angeordnet, dass sie zwei schraubengewindeartige und in einander entgegengesetzter Richtung verlaufende und sich schneidende Wendeln bilden. Die aufeinander ausgerichteten Stege 15 zweier benachbarter Verstärkungskreuze 17 berühren sich und gehen dabei ineinander über. Die Stege 15 verstärken den Isolationsabschnitt 3 der Schraube 1 derart, dass auch relativ hohe Drehmomente, wie sie beim Einschrauben der Schraube 1 in einen Dämmstoffdübel auftreten können, von der Werkzeugaufnahme 14 auf den Schraubabschnitt 2 übertragen werden können, ohne dass der Isolationsabschnitt 3 bricht.

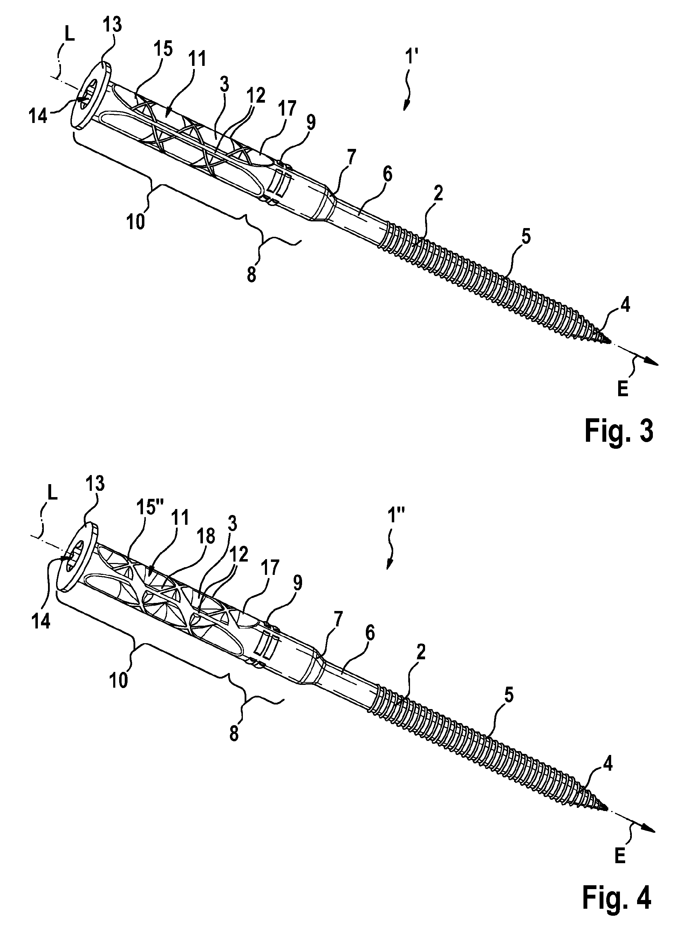

In Figur 3 ist eine weitere erfindungsgemäße Schraube 1' dargestellt, die sich nur in der Anordnung der Verstärkungskreuze 17 in den nutartigen Vertiefungen 11 des Isolationsabschnitts 3 unterscheidet. Die Verstärkungskreuze 17 sind bei dieser Schraube 1' derart angeordnet, dass das vordere Ende eines hinteren Verstärkungskreuzes 17a vor dem hinteren Ende eines vorderen Verstärkungskreuzes 17b liegt, so dass sich zwei Verstärkungskreuze 17 zweier benachbarten Vertiefungen 11 in Längsrichtung überschneiden.

Figur 4 zeigt eine Schraube 1" die der Schraube 1' der Figur 3 entspricht, mit dem Unterschied, dass die Stege 15" dachförmig abgeschrägt sind. Das bedeutet, dass an den Stegen 15" ebene und zu Radial- und Querschnittsebenen geneigte Schrägflächen 18 ausgebildet sind, so dass die Stege 15" in radialer Richtung r zur Längsachse L hin breiter und damit stabiler werden, wodurch das von der Schraube 1" aufnehmbare Drehmoment weiter vergrößert wird.

In den Figuren 5 und 6 ist ein erfindungsgemäßer Dämmstoffdübel 31 dargestellt, der aus der in Figur 4 dargestellten Schraube 1" und einer Dübelhülse 33 besteht. Die Dübelhülse 33 ist als lang gestreckter hohler Schaft ausgeführt, mit einem Schraubkanal 35 und einem Spreizabschnitt 32 am vorderen Ende, in dem sich der Schraubkanal 35 verengt. Am hinteren Ende ist bundartig ein tellerförmiger Dämmstoffhalter 34 angeordnet. Der Dämmstoffdübel 31 dient zur Befestigung einer nicht dargestellten Dämmstoffplatte an einem Untergrund. Hierzu wird der Dämmstoffdübel 31 in ein Bohrloch eingebracht, bis der Dämmstoffhalter 34 auf der Außenseite der Dämmstoffplatte und der Spreizabschnitt 32 im Bohrloch im Verankerungsgrund liegt. Dann wird die Schraube 1" in den Dämmstoffdübel 31 eingedreht, wodurch der Spreizbereich 32 radial auseinander gedrückt und aufgespreizt wird. Aufgrund der erfindungsgemäßen Ausbildung der Schraube 1" lässt sich die Schraube 1" auch dann noch problemlos in den Dämmstoffdübel 31 einschrauben, ohne dass der Isolationsabschnitt 3 bricht, wenn das Bohrloch relativ eng ist und der Verankerungsgrund aus einem harten Material wie Beton besteht, also auch dann, wenn zum Einschrauben ein hohes Drehmoment von der Werkzeugaufnahme 14 über den Isolationsabschnitt 3 auf den Schraubabschnitt 2 übertragen werden muss.

### Bezugszeichenliste

- 1, 1', 1": Schraube
- 2: Schraubabschnitt
- 3: Isolationsabschnitt
- 4: Spitze des Schraubabschnitt 2
- 5: Gewinde
- 6: Schaft des Schraubabschnitt 2
- 7: konischer Übergang
- 8: vorderer zylindrischer Abschnitt
- 9: Wulst
- 10: hinterer zylindrischer Abschnitt
- 11: Vertiefung
- 12: Rippe
- 13: Bund
- 14: Werkzeugaufnahme
- 15, 15": Steg
- 16: Abschnitt
- 17: Verstärkungskreuz
- 17a: hinteres Verstärkungskreuz
- 17b: vorderes Verstärkungskreuz
- 18: Schrägfläche
- 31: Dämmstoffdübel
- 32: Spreizabschnitt
- 33: Dübelhülse
- 34: Dämmstoffhalter
- 35: Schraubkanal
- E: Einbringrichtung
- L: Längsachse
- r: radiale Richtung
- R: Radialebene
- t: Tangente
- α₁: Winkel

## Patentansprüche

1. Schraube (1, 1', 1") zur Verwendung in einem Dämmstoffdübel (31) umfassend einen insbesondere metallischen Schraubabschnitt (2), der sich entlang einer Längsachse (L) erstreckt, und einen Isolationsabschnitt (3) aus Kunststoff, der in Einbringrichtung (E) hinter dem Schraubabschnitt (2) angeordnet und mit dem Schraubabschnitt (2) dreh- und axialfest verbunden ist, wobei der Isolationsabschnitt (3) mindestens zwei Rippen (12) aufweist, die im Wesentlichen in Längsrichtung verlaufen und zwischen denen eine nutartige Vertiefung (11) ausgebildet ist,
**dadurch gekennzeichnet,**
**dass** die Rippen (12) durch mindestens einen Steg (15, 15") miteinander verbunden sind, der zur Längsachse (L) geneigt ist und die Vertiefung (11) in zwei Abschnitte (16) teilt.

2. Schraube nach Anspruch 1, **dadurch gekennzeichnet, dass** am Isolationsabschnitt (3) mehrere nutartige Vertiefungen (11) ausgebildet sind und dass in zwei Vertiefungen (11) jeweils mindestens ein Steg (15) angeordnet ist.

3. Schraube nach Anspruch 1 oder 2, **dadurch gekennzeichnet, dass** zwei benachbarte Rippen (12) durch mindestens zwei zur Längsachse (L) und gegeneinander geneigte Stege (15) verbunden sind, die sich kreuzförmig in einem Kreuzungspunkt schneiden und gemeinsam ein Verstärkungskreuz (17) bilden.

4. Schraube nach Anspruch 3, **dadurch gekennzeichnet, dass** in zwei benachbarten Vertiefungen (11) jeweils ein Verstärkungskreuz (17) angeordnet ist.

5. Schraube nach Anspruch 4, **dadurch gekennzeichnet, dass** die zwei Verstärkungskreuze (17) in Längsrichtung zueinander versetzt angeordnet sind.

6. Schraube nach Anspruch 5, **dadurch gekennzeichnet, dass** das vordere Ende des hinteren Verstärkungskreuzes (17a) im Wesentlichen den gleichen Abstand vom vorderen Ende der Schraube (1) aufweist wie das hintere Ende des vorderen Verstärkungskreuzes (17b).

7. Schraube nach einem der Ansprüche 4 bis 6, **dadurch gekennzeichnet, dass** die beiden Verstärkungskreuze (17) die gleiche Längsausdehnung aufweisen.

8. Schraube nach einem der Ansprüche 3 bis 7, **dadurch gekennzeichnet, dass** die Stege (15) derart angeordnet sind, dass sie zwei schraubengewindeartig und in einander entgegengesetzter Richtung verlaufende Wendeln bilden.

9. Schraube nach einem der Anspürche 1 bis 8, **dadurch gekennzeichnet, dass** mindestens ein Steg (15") dachförmig abgeschrägt ist.

10. Dämmstoffdübel zur Befestigung einer Dämmstoffplatte an einem Untergrund, wobei der Dämmstoffdübel (31) einen Dämmstoffhalter (34) und eine Schraube (1, 1', 1") zur Befestigung des Dämmstoffdübels (31) aufweist,
**dadurch gekennzeichnet,**
**dass** die Schraube (1, 1', 1") eine Schraube nach einem der Ansprüche 1 bis 9 ist.

## Claims

1. Screw (1, 1', 1") for use in an insulation fixing plug (31), comprising a screw portion (2), especially a metallic screw portion, which extends along a longitudinal axis (L), and an insulation portion (3) made of plastics material, which is arranged to the rear of the screw portion (2) in the direction of introduction (E) and is axially fixedly connected to the screw portion (2) for conjoint rotation therewith, the insulation portion (3) having at least two ribs (12) which run substantially in the longitudinal direction and between which a groove-like depression (11) is formed,
**characterised in that**
the ribs (12) are connected to one another by at least one bridging element (15, 15") which is inclined with respect to the longitudinal axis (L) and divides the depression (11) into two portions (16).

2. Screw according to claim 1, **characterised in that** a plurality of groove-like depressions (11) are formed on the insulation portion (3), and in each of two depressions (11) there is arranged at least one bridging element (15).

3. Screw according to claim 1 or 2, **characterised in that** two adjacent ribs (12) are connected by at least two bridging elements (15) which are inclined with respect to the longitudinal axis (L) and with respect to one another, which bridging elements intersect to form a cross at an intersection point and together form a reinforcing cross (17).

4. Screw according to claim 3, **characterised in that** a reinforcing cross (17) is arranged in each of two adjacent depressions (11).

5. Screw according to claim 4, **characterised in that** the two reinforcing crosses (17) are arranged staggered relative to one another in the longitudinal direction.

6. Screw according to claim 5, **characterised in that** the front end of the rear reinforcing cross (17a) is substantially the same distance from the front end of the screw (1) as is the rear end of the front reinforcing cross (17b).

7. Screw according to any one of claims 4 to 6, **characterised in that** the two reinforcing crosses (17) have the same longitudinal extents.

8. Screw according to any one of claims 3 to 7, **characterised in that** the bridging elements (15) are arranged in such a way that they form two helices running helically and in opposite directions to one another.

9. Screw according to any one of claims 1 to 8, **characterised in that** at least one bridging element (15") has a roof-like slope.

10. Insulation fixing plug for fixing an insulation panel to a substrate, wherein the insulation fixing plug (31) has an insulation holder (34) and a screw (1, 1', 1") for fixing the insulation fixing plug (31),
**characterised in that**
the screw (1, 1', 1") is a screw according to any one of claims 1 to 9.

## Revendications

1. Vis (1, 1', 1") à utiliser dans une cheville (31) pour matériau isolant, comprenant une partie filetée (2) notamment métallique, qui s'étend le long d'un axe longitudinal (L), et une partie d'isolation (3) en matière plastique, qui est disposée après la partie filetée (2) dans la direction d'introduction (E) et qui est reliée en solidarité de rotation et en fixité axiale à la partie filetée (2), sachant que la partie d'isolation (3) présente au moins deux nervures (12), qui s'étendent essentiellement en direction longitudinale et entre lesquelles est formé un renfoncement (11) du genre rainure, **caractérisée en ce que** les nervures (12) sont reliées entre elles par au moins une entretoise (15, 15"), qui est inclinée par rapport à l'axe longitudinal (L) et qui divise le renfoncement (11) en deux parties (16).

2. Vis selon la revendication 1, **caractérisée en ce que** plusieurs renfoncements (11) du genre rainures sont formés sur la partie d'isolation (3), et **en ce qu'**au moins une entretoise respective (15) est disposée dans deux renfoncements (11).

3. Vis selon la revendication 1 ou 2, **caractérisée en ce que** deux nervures voisines (12) sont reliées par au moins deux entretoises (15) inclinées par rapport à l'axe longitudinal (L) et l'une par rapport à l'autre, qui se croisent en forme de croix à un point d'intersection et forment ensemble une croix de renforcement (17).

4. Vis selon la revendication 3, **caractérisée en ce qu'**une croix de renforcement respective (17) est disposée dans deux renfoncements voisins (11).

5. Vis selon la revendication 4, **caractérisée en ce que** les deux croix de renforcement (17) sont disposées en étant décalées l'une par rapport à l'autre en direction longitudinale.

6. Vis selon la revendication 5, **caractérisée en ce que** l'extrémité avant de la croix de renforcement arrière (17a) présente sensiblement la même distance de l'extrémité avant de la vis (1) que l'extrémité arrière de la croix de renforcement avant (17b).

7. Vis selon l'une des revendications 4 à 6, **caractérisée en ce que** les deux croix de renforcement (17) présentent la même étendue longitudinale.

8. Vis selon l'une des revendications 3 à 7, **caractérisée en ce que** les entretoises (15) sont disposées de telle sorte qu'elles forment deux spires du genre filetage, s'étendant dans des directions mutuellement opposées.

9. Vis selon l'une des revendications 1 à 8, **caractérisée en ce qu'**au moins une entretoise (15") est chanfreinée en forme de toit.

10. Cheville pour matériau isolant, pour la fixation d'un panneau en matériau isolant sur un support, sachant que la cheville (31) pour matériau isolant présente un support (34) pour matériau isolant et une vis (1, 1', 1 ") pour la fixation de la cheville (31) pour matériau isolant,
**caractérisée en ce que** la vis (1, 1', 1") est une vis selon l'une des revendications 1 à 9.
